Europäisches Patentamt

European Patent Office

Office européen des brevets

(19)

(11) Veröffentlichungsnummer: **0 085 176**
**B2**

(12) ## NEUE EUROPÄISCHE PATENTSCHRIFT

(45) Veröffentlichungstag der neuen Patentschrifft:
17.01.90

(51) Int. Cl.⁴: **B 23 F  21/22**

(21) Anmeldenummer: **82111764.5**

(22) Anmeldetag: **18.12.82**

(54) Messerkopf für Verzahnungsmaschinen.

(30) Priorität: **12.01.82 CH 145/82**

(43) Veröffentlichungstag der Anmeldung:
**10.08.83 Patentblatt 83/32**

(45) Bekanntmachung des Hinweises auf die Patenterteilung:
**06.11.85 Patentblatt 85/45**

(45) Bekanntmachung des Hinweises auf die Entscheidung
über den Einspruch:
**17.01.90 Patentblatt 90/03**

(84) Bennante Vertragsstaaten:
**AT CH DE FR GB IT LI SE**

(56) Entgegenhaltungen:
**CH-A-595 946         US-A-4 197 038
DE-A-2 600 187      US-A-4 260 299
FR-A-888 314          US-A-4 278 370
FR-A-1 069 104
FR-A-1 230 195
FR-A-2 364 727
US-A-874 886
US-A-1 236 834
US-A-1 249 378
US-A-1 411 390
US-A-1 667 299
US-A-1 820 415
US-A-2 230 662
US-A-2 268 326
US-A-3 354 525
US-A-3 487 592
US-A-3 760 476
US-A-4 060 881
US-A-4 093 391**

(73) Patentinhaber: **Werkzeugmaschinenfabrik  Oerlikon-Bührle AG
Birchstrasse 155
CH-8050 Zürich (CH)**

(72) Erfinder: **Kotthaus, Erich
Schmittenackerstrasse 18
CH-8304 Wallisellen (CH)**

EP 0 085 176 B2

LIBERGRAF, STOCKHOLM 1990

2

**Beschreibung**

Die Erfindung bezieht sich auf einen Messerkopf einer Verzahnungsmaschine zum Herstellen von Zahnrädern durch Herausschneiden von Zahnlücken, gemäss dem Oberbegriff des Patentanspruches 1.

Aus der US-A-1 236 834 ist ein Messerkopf zum Herstellen von Zahnrädern nach einem Einzelteilverfahren bekannt. Dabei sind alle Messer auf einem Kreis um eine Messerkopfachse angeordnet.

Der Umstand, dass der Zahnlückengrund und die beiden Zahnflanken mit derselben Spanfläche bearbeitet werden, führt nicht zu einer sauberen Spanbildung und behindert somit die Schneidleistung, da nur ein geringer Vorschub möglich ist, wenn das Auftreten störender Schwingungen vermieden werden soll.

Aus der US-A-4 278 370 ist ein Messer für den Einsatz in einem Messerkopf bekannt, das eine erste Spanfläche zum Schneiden mindestens einer Zahnflanke, eine dazu parallele zweite Spanfläche zum Schneiden mindestens eines Teils eines Zahngrundes und als Verbindung zwischen diesen beiden Spanflächen angeordnet eine dritte spanbrechende Fläche aufweist, wobei vorzugsweise eine Überlappung zwischen der ersten und zweiten Spanfläche vorgesehen ist. Die spanbrechende Fläche ist parallel zur Messerachse und aus dem Eckbereich der eine Zahnflanke und einen Zahngrund bearbeitenden Messerschneiden führend angeordnet. Weiter wird vorgeschlagen, dass Messer, mit denen beide Zahnflanken und der Zahngrund simultan bearbeitet werden, auf ihren Schneidflächen zwei parallele aus den beiden Ecken führende spanbrechende Flächen aufweisen.

Bei einer solchen Lösung wirkt sich der Umstand ungünstig aus, dass der mittlere Span auf beiden Seiten von je einem zusätzlichen Span beeinflusst wird.

Aus der DE-A-2 600 187, von der die Erfindung ausgeht, ist ein Fräskopf zur Herstellung von Bogenverzahnungen bekannt, bei welchem in jeder radialen Nut zwei Messer angeordnet sind. Das eine Messer dient dem Herstellen der Zahninnenflanke, das andere Messer dem Herstellen der Zahnaussenflanke.

Die Anordnung der beiden Messer, in Bewegungsrichtung gesehen hintereinander in der Nut, bedingt einen grösseren Platzbedarf. Dies, weil jedes Messer einzeln festgehalten wird und weil zwischen den Messern ein genügender Abstand vorgesehen sein muss, um die Späne abzuführen.

Die Erfindung, wie sie im Anspruch 1 gekennzeichnet ist, löst die Aufgabe, einen Messerkopf mit darin eingesetzten Messern zum Herstellen von Verzahnungen zu schaffen, mit dem eine Steigerung der Schneidleistung erzielt wird.

Die durch die Erfindung erreichten Vorteile sind im wesentlichen darin zusehen, dass auf diese Weise in einem Messerkopf mit gegebenem Durchmesser eine ungewöhnlich hohe Zahl von Messern angeordnet werden kann. Somit ist zum Herstellen einer oder einer bestimmten Anzahl Zahnlücken eine geringere Schneidzeit erforderlich. Ferner wird es durch die Erfindung möglich gemacht, Messerköpfe mit kleineren Durchmessern vorzusehen.

Im folgenden wird die Erfindung anhand von Zeichnungen, welche zwei Ausführungswege darstellen, näher erläutert, wobei jedoch nur der Ausführungsweg mit zwei separaten Messerhälften erfindungsgemäss beansprucht wird. Es zeigen:

Fig. 1    einen Teil eines Messerkopfes in Aufsicht,

Fig. 2    einen Teil eines Messerkopfes gemäss Fig. 1 in Ansicht,

Fig. 3    einen Messerkopf im Schnitt,

Fig. 4    eine Ansicht eines Teils eines Messers,

Fig. 5    eine Aufsicht eines Teils eines Messers,

Fig. 6    eine Seitenansicht eines Teils eines Messers,

Fig. 7    eine Aufsicht eines Messers parallel zu seiner Rückfläche,

Fig. 8    bis 11 An- und Aufsichten eines weiteren Messers gemäss Fig. 4 bis 7,

Fig. 12   eine Vorderansicht eines Messers,

Fig. 13   ein Messerpaar.

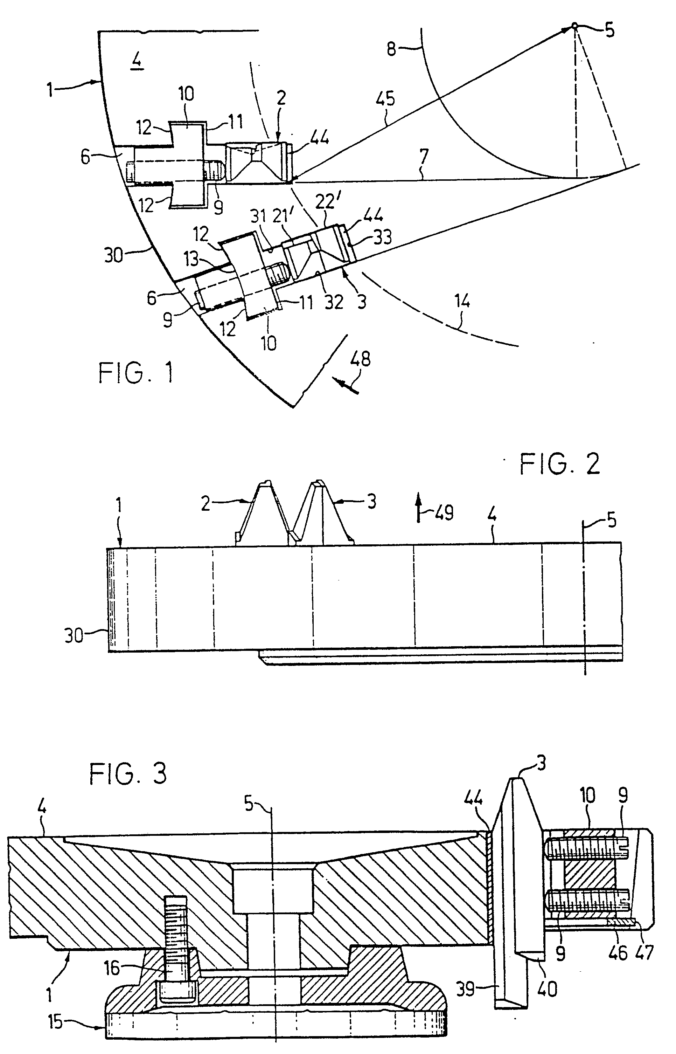

Fig. 1 zeigt einen Teil eines Messerkopfes 1 in Aufsicht. Dieser ist in der Regel kreisförmig ausgebildet und trägt Messer 2 und 3, von denen üblicherweise eine grössere Anzahl als hier einfachheitshalber gezeigt, gleichmässig entlang des ganzen Umfanges des Messerkopfes angeordnet sind. Diese Messer 2 und 3 treten aus einer Stirnfläche 4 (Fig. 2) hervor. Der Messerkopf 1 ist in nichtnäherdargestellter Weise um eine Messerkopfachse 5 in einer Verzahnungsmaschine drehbar gelagert. Die Messer 2 und 3 sind in Schlitzen 6 angeordnet, die gegen eine Umfangsfläche 30 hin offen sind. Ist der Messerkopf 1 zum Schneiden von Zahnrädern nach einem Einzelteilverfahren, bei dem eine Zahnlücke nach der anderen einzeln geschnitten wird, vorgesehen, so sind die Schlitze 6 radial gegen die Messerkopfachse 5 verlaufend angeordnet.

Ist der Messerkopf zum Schneiden von Zahnrädern nach einem kontinuierlichen Verfahren, wobei alle Zahnlücken gleichzeitig hergestellt werden, bestimmt, so verlaufen die Schlitze 6 entlang einer Tangente 7 an einen Kreis 8 um die Messerkopfachse 5. Der Kreis 8 wird auch als kleiner Rollkreis bezeichnet.

In den Schlitzen 6 werden die Messer 2 und 3 durch Seitenflächen 31 und 32 sowie eine Endfläche 33 einerseits und Schrauben 9 andererseits gehalten. Die Schrauben 9 ihrerseits stützen sich auf Riegeln 10 ab, die sich ihrerseits über Stützflächen 12 am Messerkopf 1 gegen die Spannkraft der Schrauben 9 abstützen. Die Stützflächen 11 werden durch Herausarbeiten einer Quernut 11 zum Schlitz 6 gebildet. Vorzugsweise bilden die Stützflachen 12 mit den Seitenflächen 31 und 32 keinen rechten Winkel. Die Stützflächen 12 sind leicht pfeilförmig angeordnet, wobei die Pfeilspitze gegen das Messer 2, 3 weist. Besonders günstig ist es, die Stützflächen 12 auf einem Bogen 13 anzuordnen. Alle Schlitze 6 eines Messerkopfes 1 sind unter sich gleich und gleicherweise angeordnet, so dass die Messer 2 und 3 auf einen Kreis 14 zu liegen kommen.

Fig. 3 zeigt den Messerkopf 1 im Schnitt. Dabei erkennt man ein Messer 3, einen Riegel 10 und Schrauben 9, welche das Messer 3 halten. Ein Befestigungsflansch 15 dient dem Befestigen des Messerkopfes 1 auf einer Spindel. Dieser ist mittels Schraubverbindungen 16, wovon nur eine dargestellt ist, am Messerkopf 1 befestigt. Ferner sind Distanzplättchen 44 vorgesehen die es erlauben den Abstand 45 der Messer von der Messerkopfachse 5 einzustellen. Die Riegel 10 werden von unten durch einen Ring 46 abgestützt, der in einer Nut 47 angeordnet ist.

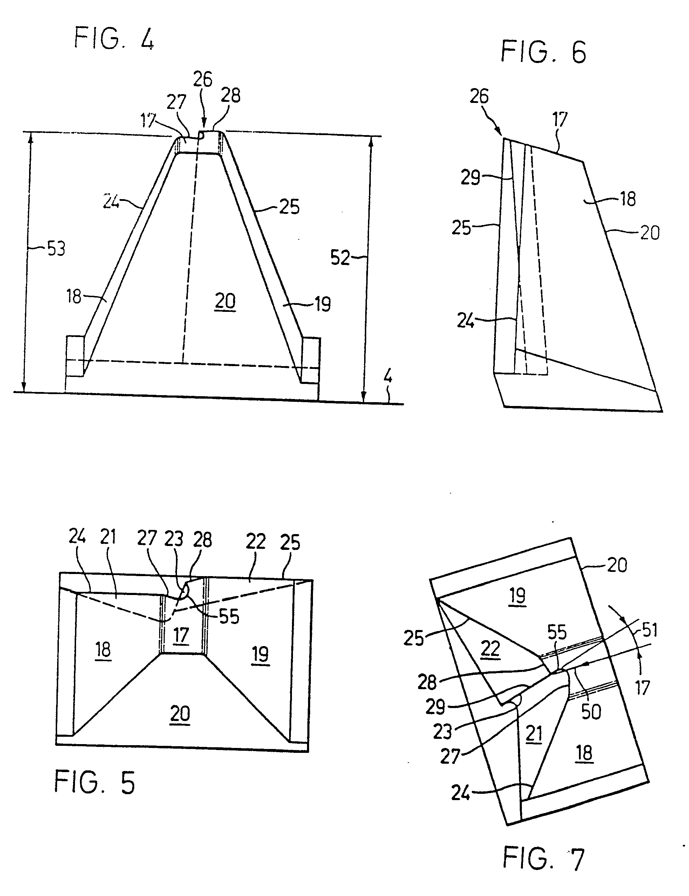

Die Fig. 4 zeigt einen Teil eines Messers in dessen Bewegungsrichtung gesehen von hinten. Darauf erkennt man eine Kopffreifläche 17, je eine Flankenfreifläche 18 und 19 sowie eine Rückfläche 20. Dabei ist nur der über eine Stirnfläche 4 des Messerkopfes 1 hinausragende Teil des Messers ersichtlich. Unter der Stirnfläche 4 liegende Teile des Messers, die z. B. zu dessen Befestigung dienen, sind einfachheitshalber nicht gezeichnet.

Fig. 5 zeigt dasselbe Messer von oben, d.h. senkrecht zur Stirnfläche 4 betrachtet.

Fig. 6 ist eine Seitenansicht eines Messers wie es in Längsrichtung des Schlitzes 6 betrachtet erscheint. Fig. 7 zeigt dasselbe Messer aus einer Blickrichtung parallel zur Rückfläche 20. Somit werden auch zwei Spanflächen 21 und 22 sowie Schneiden 24 und 25 sowie eine Kopfschneide 26 (siehe Fig. 4 und 6), welche zwei Abschnitte 27 und 28 aufweist, sichtbar. Eine Trennfläche 23, welche einerseits die Spanflächen 21 und 22 begrenzt, bildet mit der in Bewegungsrichtung des Messers vorversetzten Spanfläche 22 eine weitere Schneide 29, die in den Fig. 6 und 7 ersichtlich ist. Vorzugsweise ist der Übergang 55 von der Spanfläche 21 zur Trennfläche 23 gerundet.

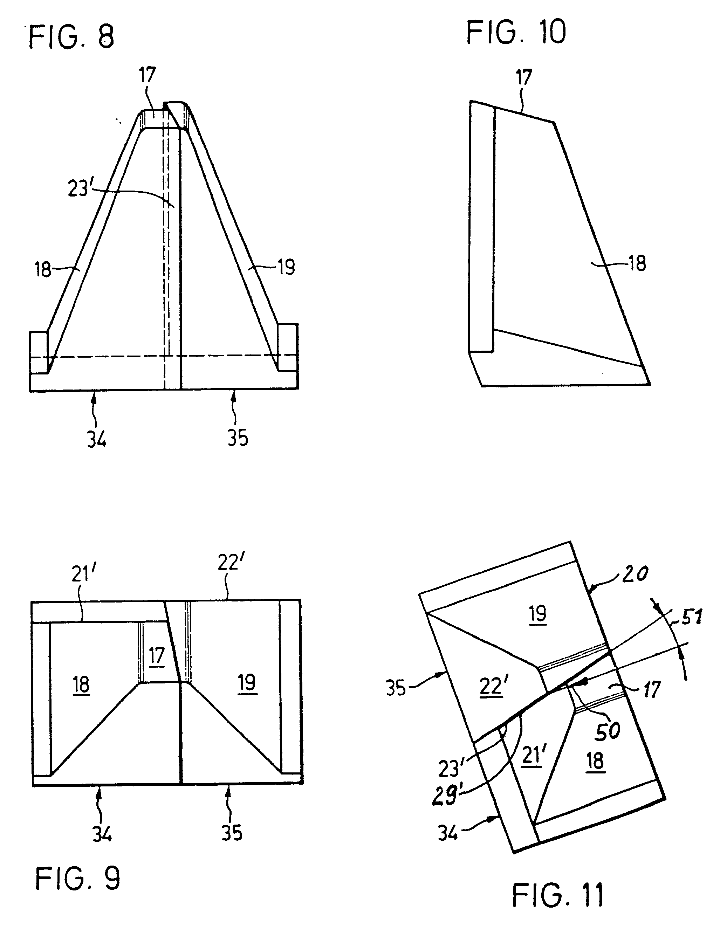

Die Fig. 8, 9, 10 und 11 zeigen ein weiteres Messer in Ansichten entsprechend den Fig. 4, 5, 6 und 7. Dieses Messer weist ebenfalls Spanflächen 21', 22', Flankenfreiflächen 18, 19 sowie die Kopffreifläche 17 auf. Dagegen trennt indungsnäss die Trennfläche 23' das ganze Messer in zwei separate Messerhälften 34 und 35.

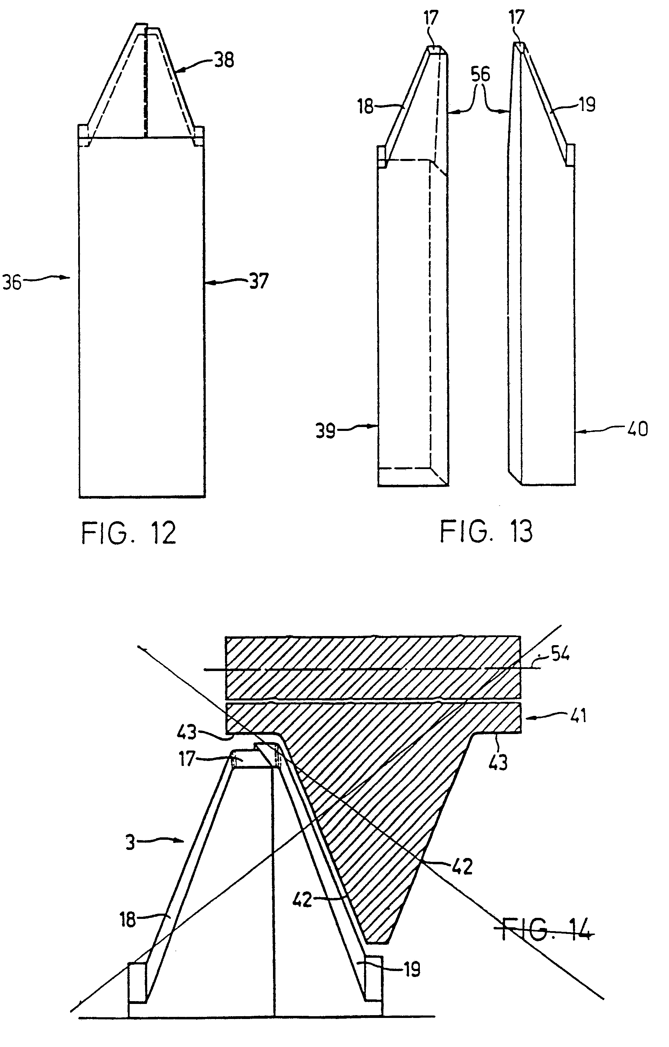

Fig. 12 zeigt ein Stabmesser 36 in seiner ganzen Länge. Dieses Stabmesser 36 weist einen prismatischen Schaft 37 auf, der oben in das Messer 38 mit den Span- und Freiflächen mündet.

Fig. 13 zeigt zwei separate Stabmesserhälften 39 und 40 die zusammen in einem Schlitz 6 befestigt ein Stabmesser 36 ergeben. Die Stabmesserhälften 39 und 40 weisen je einen Schneidenkopf 56 auf.

Ist der Messerkopf 1 beispielsweise mit Stabmessern gemäss den Fig. 12 oder 13 bestückt, so können die Schlitze 6 statt senkrecht zur Stirnfläche 4 auch zur Stirnfläche 4 geneigt angeordnet sein. In diesem Falle werden in die Schlitze 6 eingesetzte Stabmesser nicht mehr parallel, sondern windschief zur Messerkopfachse 5 nachgestellt.

Beim Schneiden von Zahnlücken in einen Zahnradrohling wird der Messerkopf 1 in der Verzahnungsmaschine in Richtung eines Pfeiles 48 (Fig. 1) um die Messerkopfachse 5 gedreht. Zusätzlich erfolgt ein Vorschub in Richtung eines Pfeiles 49 gemäss Fig. 2. Dabei treffen die Messer zuerst mit ihrer Kopfschneide 26 auf den Zahnradrohling auf. Allerdings trifft von der Kopfschneide 26 zuerst auch wieder nur ihr Abschnitt 28 auf, der, weil er durch die in Bewegungsrichtung vorverschobene Spanfläche 22 gebildet wird, infolge der Neigung der Kopffreifläche 17 von der Stirnfläche 4 einen grösseren Abstand 52 aufweist als der Abstand 53 des Abschnittes 27 (Fig. 4). Somit wird beim ersten Auftreffen des Abschnittes 28 auf den Zahnradrohling ein Span erzeugt, der durch drei verschiedene Schneiden herausgeschnitten wird, nämlich: den obersten Abschnitt der Schneide 25, den Abschnitt 28 der Kopfschneide 26 sowie den obersten Abschnitt der Schneide 29.

Dringen die Messer später tiefer in den Zahnradrohling ein, so bildet auch der Abschnitt 27 der Kopfscheide 26 zusammen mit dem obersten Abschnitt der Schneide 24 einen Span. Durch diese Anordnung der Kopfschneide 26 mit der Schneide 29 werden zwei verschiedene Späne herausgeschnitten - einer im wesentlichen durch die Spanfläche 21, ein weiterer im wesentlichen durch die Spanfläche 22 - die sich sauber lösen und aus dem Zahnlückengrund entfernen lassen. Wichtig ist dabei zu beachten, dass auch die Trennfläche 23 mit der Bewegungsrichtung 50 einen Freiwinkel 51 bildet (siehe Fig. 7).

Es ist klar, dass diese Messer auch auf Messerköpfen angeordnet werden können, die nicht kreisrund sondern beispielsweise viereckig sind und die sich nicht um eine Achse drehen, sondern auf einer anderen Bewegungsbahn umlaufen.

**Patentansprüche**

1. Messerkopf (1) einer Verzahnungsmaschine zum Herstellen von Zahnrädern durch Herausschneiden von Zahnlücken mit in Schlitzen (6) einsetzbaren, stabförmigen und aus einer Stirnfläche (4) herausragenden Messern (3) wobei jeder Schlitz (6) zwei separate Messerhälften (34, 35) mit je einer einzigen Spanfläche (21', 22') zum Bearbeiten beider Flanken und des Grundes einer Zahnlücke enthält und die zwei Spanflächen (21', 22') zueinander in Schneidrichtung stufenförmig versetzt und die Vorversetzte die Rückversetzte überlappend angeordnet sind, dadurch gekennzeichnet, dass die Messer (3) und die Schlitze (6) in ihrem Aufnahmebereich so ausgebildet sind, dass die stabförmigen Körper der

zwei Messerhälften (34, 35) quer zur Schneidrichtung nebeneinander, aneinander anliegend, mit ihrer Rückfläche (20) an einer gemeinsamen Seitenfläche (32) des Schlitzes (6) aufliegend und integriert einen viereckigen Querschnitt bildend angeordnet sind, ferner dass eine gemeinsame Trennfläche (23') die zwei Spanflächen (21', 22') trennt, die Trennfläche (23') zusammen mit der vorversetzten Spanfläche (22') eine die rückversetzte Spanfläche (21') überlappende Schneide (29') bildet und die Trennfläche (23') mit einer Bewegungsrichtung (50) einen Freiwinkel (51) bildet sowie dass die Kopfschneide der vorversetzten Spanfläche (22') einen grösseren Abstand von der Stirnfläche (4) aufweist als die Kopfschneide der rückversetzten Spanfläche (21').

2. Messerkopf nach Anspruch 1 dadurch gekennzeichnet, dass die stabformigen Körper der zwei Messerhälften (34, 35) gleiche Querschnitte aufweisen.

3. Messerkopf nach Anspruch 1 oder 2 dadurch gekennzeichnet, dass die zwei Spanflächen (21', 22') gegen die eigene Messerachse geneigt unter einem Winkel angeordnet sind.

4. Messerkopf nach Anspruch 3 dadurch gekennzeichnet, dass die beiden Spanflächen (21', 22') zueinander geneigt angeordnet sind.

5. Messerkopf nach einem der vorangehenden Ansprüche zum Schneiden von Zahnrädern nach einen kontinuierlichen Verfahren, wobei die Schlitze (6) tangential zu einem Kreis (8) um eine Messerkopfachse (5) verlaufen, dadurch gekennzeichnet, dass alle Messer (3) auf einem einzigen Kreis (14) angeordnet und unter sich identisch sind.

## Claims

1. Cutter head (1) for a gear cutting machine for manufacturing gears by cutting out tooth gaps, containing in slots (6) thereof bar-type cutters (3) which project from one end face (4) of the cutter head (1), whereas each slot (6) comprises two separate cutter halves (34, 35) each one with a single cutting face (21', 22') for machining both flanks and the bottom of a tooth gap and the two cutting faces (21', 22') are displaced gradually with respect to each other in the cutting direction and the cutting face which is forwardly displaced overlapping the one which is rearwardly displaced, characterized in that the cutters (3) and the slots (6) are formed within the region of receptions such that the bar-type bodies of the two cutter halves (34, 35) are arranged side by side and adjacent one another, transversely to the cutting direction, the rear faces (20) of them resting upon a common lateral face (32) of the slot (6) and integral forming a rectangular cross-section, further that a common separating face (23') separates the two cutting faces (21', 22'), the separating face (23') together with the forwardly displaced cutting face (22') form a cutting edge (29) which is overlapping the rearwardly displaced cutting face (21') and the separating face (23') together with a direction of movement (50) form a clearance angle (51), and that the top cutting edge of the forwardly displaced cutting face (22') possesses a larger distance from the end face (4) than the top cutting edge of the rearwardly displaced cutting face (21').

2. Cutter head as claimed in claim 1, characterized in that the bar-type bodies of the two cutter halves (34, 35) have equal cross-sections.

3. Cutter head as claimed in claim 1 or 2, characterized in that the two cutting faces (21', 22') are inclined by an angle with respect to the cutter axis.

4. Cutter head as claimed in claim 3, characterized in that the two cutting faces (21,' 22') are inclined with respect to one another.

5. Cutter head as claimed in one of the preceding claims with the slots (6) extending tangentially to a circle (8) about the cutter head axis (5) for producing gears in a continuous gear cutting process, characterized in that all of the cutters (3) are arranged on a single circle (14) and are identical with each other.

## Revendications

1. Tête porte-lames (1) pour une machine à tailler les roues pour réaliser des roues dentées en taillant les intervalles de dents à l'aide de lames (3) en forme de barreaux, susceptibles d'être placées dans des fentes (6) et venant en saillie par rapport à une surface frontale (4), et pour usiner les deux flancs et la gorge d'un intervalle de dent à l'aide d'une lame placée dans une fente respective (6), chaque fente (6) reçoit deux moitiés distinctes de lame (34, 35) avec chaque fois une seule surface d'usinage (21', 22') et les deux surfaces d'usinage (21', 22') sont décalées en gradins l'une par rapport à l'autre dans la direction de coupe et la moitié avant chevauche la moitié arrière, caractérisée en ce que les lames (3) et les fentes (6) ont une zone de réception réalisée de façon que les corps en forme de barreaux des deux moitiés de lame (34, 35) soient appliqués l'un contre l'autre, transversalement à la direction de taille, en s'appuyant par leur surface arrière (20) contre une surface latérale commune (32) de la fente (6) et soient intégrés en formant une section rectangulaire, et en ce qu'en outre une surface de séparation commune (23') sépare deux surfaces d'usinage (21', 22'), une arête qui chevauche avec la surface d'usinage amont (22'), la surface d'usinage (21') aval, forme un angle libre (51) avec une direction de déplacement (50), et en ce que l'arête de coupe de tête de la surface d'usinage (22') en amont est à une plus grande distance de la surface frontale (4) que l'arête de coupe de tête de la surface d'usinage aval (21').

2. Tête porte-lames selon la revendication 1, caractérisée en ce que les corps en forme de barreaux des deux moitiés de lame (34, 35) ont des sections identiques.

3. Tête porte-lames selon les revendications 1 ou 3, caractérisé en ce que les deux surfaces d'usinage (21', 22') sont disposées inclinées suivant un angle par rapport à l'axe propre de la lame.

4. Tête porte-lames selon la revendication 3, caractérisée en ce que les deux surfaces d'usinage (21', 22') sont inclinées l'une par rapport à l'autre.

5. Tête porte-lames selon l'une des revendications précédentes pour tailler des roues dentées selon un procédé en continu, les intervalles (6) étant tangents à un cercle (8) autour d'un axe de tête porte-lames (5), caractérisées en ce que toutes les lames (3) sont prévues sur un même cercle (14) et sont identiques entre elles.

FIG. 1

FIG. 2

FIG. 3

FIG. 4

FIG. 6

FIG. 5

FIG. 7

FIG. 8

17

23'

18

19

34    35

FIG. 10

17

18

FIG. 9

21'    22'

18    17    19

34    35

FIG. 11

20

19

51

35

22'    17

50

23'    21'    18

29'

34

5

FIG. 12

FIG. 13

FIG. 14